# EUROPEAN PATENT SPECIFICATION

(11) **EP 0 355 895 B1**
(45) Date of publication and mention of the grant of the patent: **14.12.1994**
(21) Application number: 89202032.2
(22) Date of filing: 02.08.1989
(51) Int. Cl.: C08F 8/46, C10M 119/04

(54) **Process for the preparation of succinic anhydride derivatives**
Verfahren zur Herstellung von Alkenylbernsteinsäureanhydrid-Derivaten
Procédé de préparation de dérivés de l'anhydride succinique

(30) Priority: 05.08.1988 GB 8818711
(43) Date of publication of application: 28.02.1990
(73) Proprietor: SHELL INTERNATIONALE RESEARCH MAATSCHAPPIJ B.V., 2596 HR Den Haag (NL)
(72) Inventor: Dannenberg, William, NL-1031 CM Amsterdam (NL); Verkouw, Hendrik Tijmen, NL-1031 CM Amsterdam (NL)

(56) References cited:
- FR-A- 2 378 049
- US-A- 3 231 498
- US-A- 4 048 258
- US-A- 4 316 973

## Description

This invention relates to the preparation of succinic anhydride derivatives, more particularly polyolefin-substituted succinic anhydrides which can be converted into additives having advantageous properties for blending into lubricating oils, together with such conversion and use.

Polyolefin-succinic derivatives are well established as dispersant additives for lubricating oils, being of the dispersant type often referred to as ashless because of the absence of a metal component. These derivatives are prepared by reaction of the polyolefin with maleic anhydride and subsequently with a polyalcohol or polyamine. The first reaction, between the polyolefin and the maleic anhydride is often carried out in the presence of chlorine, which permits a reduced reaction time, and a more efficient polyolefin utilisation. This may be achieved by the direct introduction of chlorine or via chlorination of the polyolefin prior to reaction with maleic anhydride. One consequence of these "chlorine" routes is an unavoidable residual amount of chlorine in the final product. The amounts of such residual chlorine are not large, generally in the range of 1000-5000 ppm, and hitherto have been quite acceptable from a practical and commercial standpoint. However, increasing environmental pressures are creating a demand for lubricating oil additives which are essentially free from chlorine, and this criterion cannot easily be met with polyolefin-succinic derivatives produced by the chlorine route.

An alternative to the "chlorine" routes is the so-called "thermal" route in which the polyolefin and maleic anhydride are heated together, optionally in the presence of a catalyst. This process avoids chlorine residues (except for those present as impurities in the reactants and the catalyst, if used) but tends to be inconveniently slow, with a lower convertion of polyolefin, and also to result in the formation of undesirable amounts of tarry by-products (often referred to as "polymala"). An additional handicap of the thermal route is the difficulty of preparing polyolefin-succinic derivatives in which the molecular proportion of the succinic component is in significant excess.

FR-A-2378049 discloses that isobutene polymers having a degree of polymerisation P of from 10 to 100 and a high proportion of reactive double bonds may be obtained by polymerising isobutene with boron trifluoride as the initiator, if the polymerisation is carried out at from -50 to +30°C, from 1 to 20 mmoles of boron trifluoride are used per mole of isobutene and the mean polymerisation time is confined to 1 to 10 minutes. The isobutene polymers can be reacted firstly with maleic anhydride and then with an amine to form an additive for mineral oils. Example 3 describes the reaction of the isobutene polymers with maleic anhydride for a period of 4 hours at 200°C using an excess of maleic anhydride.

It has now been found that succinic:polyolefin ratios in excess of 1.3:1, and suitably at least 1.5:1, can form luboil ashless dispersants having a significantly increased effectiveness in dispersing soot generated during engine operation, and also can improve viscosity index of the oil. However, "thermal" processes tend to yield products in which this ratio does not exceed 1.3:1. Accordingly there is a need for a "thermal" process whose products contain succinic and polyolefin components in a ratio exceeding 1.3.

It has now been discovered that the structure of the terminal grouping in a polyolefin influences the succinic:polyolefin ratio in the resultant product. By way of illustration, the terminal groupings in polyisobutylene (polyisobutene) normally comprise predominantly the following: 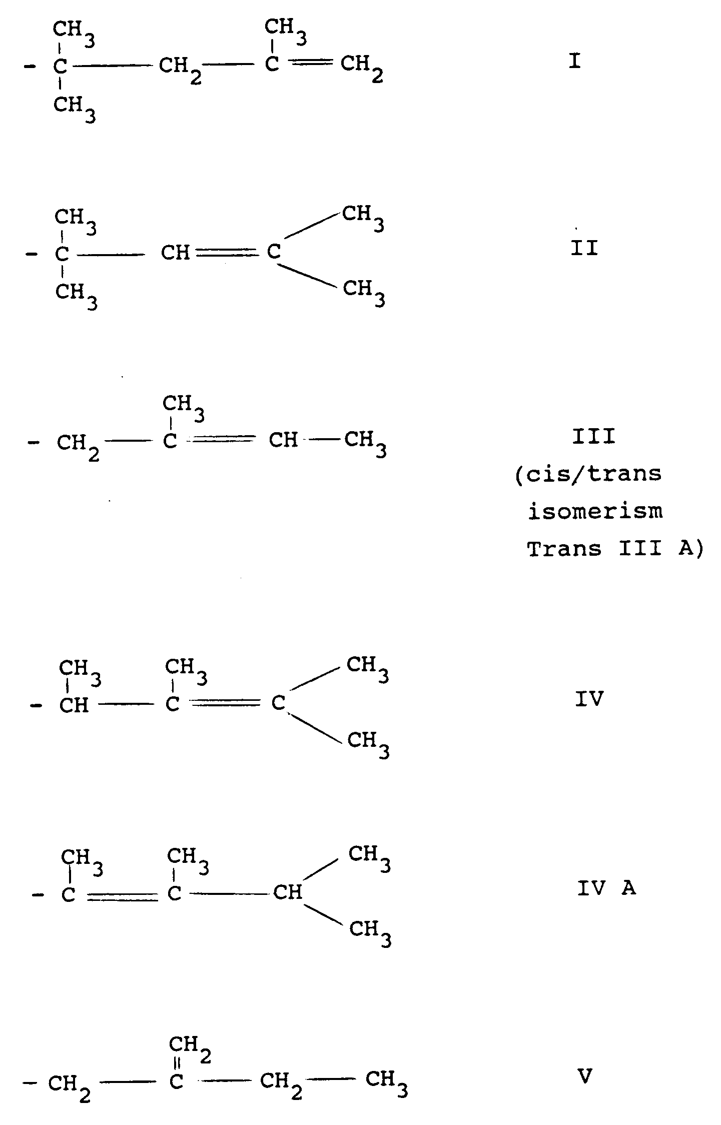
According to the present invention, it has unexpectedly been discovered that the "thermal" process can yield products containing succinic residues at levels not previously attainable by this route if the polyolefin reactant contains a high proportion of terminal groupings having an alpha olefinic bond (e.g. structure I above) or terminal groupings in equilibrium with such alpha olefinic bond-containing groupings (e.g. structure II above). This discovery thereby opens up the possibility of obtaining polyolefin-succinic derivatives which are essentially free from chlorine residues and possess a desirably high succinic:polyolefin ratio. Furthermore, this choice of polyolefin reactant also achieves high conversion ratios thereby yielding products which contain only low levels of residual, unconverted polyolefin.

The present invention therefore provides a process for the preparation of polyolefin-substituted succinic anhydrides essentially free from chlorine which comprises heating a polyolefin containing at least 70% of the terminal groupings in a structure having an alpha olefinic bond and/or structures in equilibrium with such alpha olefinic structures (tautomers thereof), with at least a molar excess of maleic anydride (i.e. molar ratio of maleic anhydride:polyolefin is at least 2:1), for a sufficient period of time to obtain polyolefin-substituted succinic anhydrides in which the average molar ratio of succinic groups to polyolefin chains is greater than 1.3:1.

The polyolefin is suitably derived from one or more olefin monomers containing from 2 to 6 carbon atoms, and is preferably polyisobutylene. The terminal groupings of the polyolefin should, as indicated, be such as to provide at least 70% of those structures having an alpha olefinic bond and/or structures in equilibrium therewith (tautomers thereof). In the case of polyisobutylene, the alpha olefinic structure is that designated as I above, and it has been found that structure II is in equilibrium therewith. Furthermore, it has been found that the highest succinic:polyolefin ratios are usually attained when the polyolefin is one in which those groupings containing a terminal (alpha) double bond form the major single component of the terminal groupings; hence a preferred embodiment of the present process is that wherein such polyolefins are heated with maleic anhydride. Preferably, such terminal double bond groupings form at least 40%, and especially more than 50%, of the terminal groupings, whilst terminal groupings other than those having an alpha olefinic bond or in equilibrium therewith, in particular - in the case of polyisobutylene - structure IV, preferably constitute less than 25% of the overall total of terminal groupings. The molecular weight of the polyolefin (measured as a number average) is suitably within the range of from 600 to 5000, preferably 750 to 2500, and especially from 850 to 2100. Polyisobutylene products fulfilling these conditions, and so suitable for use in the process of present invention, are commercially available under the Trade Mark "Ultravis".

The detailed operational conditions of the thermal reaction between maleic anhydride and the polyolefin are well established in the prior art, for example as described in UK Patent No. 1483729. Thus, the temperature used is normally greater than 150°C, and is preferably in the range from 180° to 250°C, especially from 195° to 230°C. In principle, the reaction may be carried out under atmospheric pressure, but since the boiling point of maleic anhydride is about 200°C (variously quoted as 198° and 202°C) and the preferred reaction temperature is around or slightly above that boiling point, it is often convenient to carry out the reaction in an autoclave, when the pressure will be superatmospheric, e.g. at least 2 bar and may be as high as 30 bar.

As indicated above, the maleic anhydride should be at least in molar excess (based on the polyolefin). The actual extent of such excess will naturally depend on the succinic/polyolefin ratio required in the final product. In practice it is generally preferred to use a maleic anhydride molar excess of greater than 1.5, and especially at least 2 (i.e. a molar ratio of maleic anhydride:polyolefin of at least 3:1). By means of such reaction conditions, allied with selection of a polyolefin having the requisite terminal groupings, it has been found possible to produce polyolefin-substituted succinic anhydrides in which the average molar ratio of succinic groups to polyolefin chains is greater than 1.5:1, and especially at least 1.7:1, accompanied with polyolefin conversion of up to 85-90%.

Catalysts may be added to increase the reaction rate (thereby reducing reaction time) and/or reduce by-product formation, but their use is not essential, and may sometimes even be disadvantageous if the final product is required to be completely free from metal components or contaminants. If desired, the process may be carried out in the presence of a solvent, such as white spirit, as described in UK Patent No. 1483729.

The polyolefin-substituted succinic anhydrides produced by the present process (as such or in the form of their salts) have direct utility as additives for lubricant and fuel compositions, for example as fuel additives in the manner described in US Patent No. 3346354 or EP-A-0207560, and as dispersant/detergent additives in lubricant compositions in manner described in US Patent No. 3288714. However, the principal application of these anhydrides is as intermediates for the preparation of polyolefin-succinic esters and succinimides by reaction with polyols or amines, respectively. These products have excellent properties as lubricant additives.

In order to form such esters, the substituted succinic anhydride is suitably reacted with a polyol, such as divalent alcohols, e.g. glycol, 1,2-dihydroxypropane, 1,3-dihydroxypropane, the dihydroxybutanes, and the dihydroxypentanes, trivalent alcohols, e.g glycerol, the trihydroxybutanes, and the trihydroxypentanes, and the higher alcohols, e.g tetritols, pentitols and hexitols. Preferred esters of polyolefin-succinic acid are obtained with polyvalent alcohols with three or more hydroxyl groups, such as glycerol, pentaerythritol, mannitol and trimethylolpropane.

In order to form the succinimide derivatives, the substituted anhydride is suitably reacted with an amine containing at least one = NH (secondary amino) group, which may be a linear or branched alkylene polyamine, a cycloaliphatic polyamine, or a heterocyclic polyamine.

Suitable branched polyamines used in the succinimide reaction product of the present invention include those of formula I 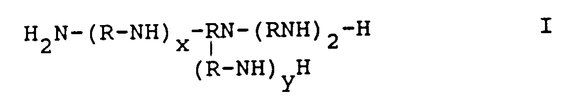
in which R is a C₂₋₄ alkylene group, x is 0-7, y is 1-7, z is 0-7 and x + y + z is 1-8.

Cycloaliphatic polyamines are suitably selected from 5 or 6-membered ring systems, such as cyclopentane or cyclohexane rings. The amino groups may be attached directly to the rings, or alternatively the rings may be substituted by amino alkyl groups. A suitable cyclic polyamine is 1,4-diaminocyclohexane. Among suitable heterocyclic polyamines are tetra- and dihydro pyridines, piperidines, azetidines, pyrroles, piperazines, substituted by one or more amino, amino alkyl groups of formula II

H₂N-(R-NH)_{w}-R

in which w is from 0-5 and R is a C₂₋₄ alkylene group. Especially preferred are N-(2-aminoethyl)piperazine and 1,4-bis(2-aminoethyl)piperazine.

Suitable linear polyamines used in the succinimide reaction product of the present invention include the ethylene polyamines, but also alpha,beta-diaminopropane or butane, propylene polyamines, di(trimethylene)triamine, and butylene polyamines. Particularly preferred are the ethylene polyamines, such as diethylene triamine, triethylene tetramine, tetraethylene pentamine and pentaethylene hexamine. Such compounds are conveniently prepared by reacting an alkylene chloride with ammonia or by reacting ethylene imine with e.g. ammonia. These reactions result in a mixture of alkylene polyamines, including cyclic products such as piperazines.

The polyamines advantageously have a molecular structure consisting of ⁅N(R₂)-R₁⁆ₐ and/or 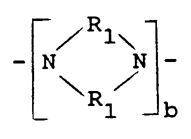
as the building blocks and of -R₁-NR₂R₃ and/or 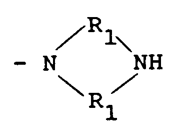
as the chain terminating groups, wherein R₁ is ethylene, propylene, trimethylene or a butylene group, R₂ and R₃ are hydrogen or -R₁-NH₂, a is 0 to 7 and b is 1 to 3.

The polyolefin-succinic ester or imide may also be subjected to post-treatment according to procedures well-known to those skilled in the art (e.g. as described in UK Patent No. 1565627), for example by reaction with sulphur or phosphorus derivatives or - especially - by reaction with boron derivatives, such as boron oxides or acids.

Of particular relevance in achieving good properties as lubricant additives is triethylene tetramine and tetraethylene pentamine, and commercial mixtures containing these products. The conditions for reaction between the substituted succinic anhydride and the polyol or polyamine are well-established in the prior art, as is the use of such esters and succinimides for lubricating oil-components which forms a further aspect of this invention.

The lubricant compositions of this invention include lubricating oils and greases although, for the most part, they will be lubricating oils. The lubricating oil compositions of this invention are based on natural and synthetic lubricating oils and mixtures thereof. These lubricants include crankcase lubricating oils for spark-ignited and compression-ignited internal combustion engines, such as automobile and truck engines, and marine and railroad diesel engines. Automatic transmission fluids, transaxle lubricants, gear lubricants, metal-working lubricants, hydraulic fluids and other lubricating oil and grease compositions can also benefit from the incorporation therein of the polyolefin-succinic derivatives of the present invention.

Natural oils include animal oils and vegetable oils (e.g. castor oil, lard oil) as well as mineral lubricating oils such as liquid petroleum oils and solvent-treated or acid-treated mineral lubricating oils of the paraffinic, naphthenic or mixed paraffinic-naphthenic types. Oils of lubricating viscosity derived from coal or shale are also useful base oils. Synthetic lubricating oils include hydrocarbon oils and halosubstituted hydrocarbon oils such as polymerized and interpolymerized olefins (e.g., polybutylenes, polypropylenes, propylene-isobutylene copolymers, chlorinated polybutylenes); poly(1-hexenes), poly(1-octenes), poly(1-decenes) and mixtures thereof; alkylbenzenes (e.g. dodecylbenzenes, tetradecylbenzenes, dinonylbenzenes, di(2-ethylhexyl)benzenes); polyphenyls (e.g. biphenyls, terphenyls, alkylated polyphenyls); alkylated diphenyl ethers and alkylated diphenyl sulphides and the derivatives.

The present invention also provides a concentrate for formulating lubricating compositions which comprises a polyolefin-substituted succinic anhydride, acid, ester or imide when prepared by a process according to the invention together with a carrier oil which is compatible with said succinic derivative and is miscible with lubricating base oil.

The invention is further illustrated by the following Examples, in which maleic anhydride (MALA) was thermally coupled with two different grades of polyisobutylene (polyisobutene) (PIB), namely "Hyvis-10" or "Ultravis"-10. Each of those PIB has a molecular weight (number average) of about 950, but the products differ significantly in the proportion of different terminal grouping structures. Referring to the structures designated previously under references I - V, the end-group structures of these products were tentatively determined (by NMR analysis) to be as follows: (figures being mol %)

| Sample | I | II | III | IIIA | IV | IVA | V | Other |
|---|---|---|---|---|---|---|---|---|
| "Hyvis"-10 | 3 | 0 | 16 | 44 | 21 | 5 | 0 | 11 |
| "Ultravis"-10 | 74 | 10 | 1 | 2 | 5 | 0 | 3 | 5 |

It will, of course, be understood that the precise figures may vary between different batches of product, although the underlying levels of isomers will be essentially comparable.

The reaction between MALA and "Hyvis" PIB was carried out in an autoclave at superatmospheric pressure, the detailed reaction conditions being set out in Table 1 below, which records also the number of succinic groups per PIB chain in the resultant product together with the amount of poly-(maleic anhydride) by-product.

The detailed reaction conditions are described below, together with the yield of product and its acid value. That parameter serves as the basis for calculating the number of succinic groups per polyolefin chain (number of MALA groups per polyisobutene chain) (based on the premise that all the acidic groupings derive from succinic residues).

### Example 1

641 part of "Ultravis" 10 (Mₙ=950) is preheated to 165^{o}C. After addition of 190 parts of maleic anhydride the temperature is raised to 198^{o}C over 15 minutes. After 4 hours the temperature is gradually increased to 200-203^{o}C and the reaction is continued for 20 hours. Samples taken at various stages of the reaction and the end product are freed of MALA by heating at 160^{o}C under reduced pressure.

Tarry by-products are removed by filtration or extraction with water.

The purified end product contains 91% w polyisobutene succinic anhydride and has an acid value of 2.77 m Eq H⁺/g. This corresponds to the average number of MALA groups per polyisobutene chain of 1.75.

### Example 2

641 pbw of "ULTRAVIS 10" (Mₙ=950) and 190 parts of maleic anhydride (MALA) are heated within 60 min. to a temperature of ca. 198°C (boiling point of MALA). After ca. 6 hours the temperature was gradually increased to 200-203°C, and the reaction was continued for 18 hours. The crude reaction product was freed of unreacted MALA by heating at 160°C under reduced pressure. Tarry by-products were removed by filtration or extraction. The filtered end product contained 90% w polyisobutene succinic anhydride and has an acid value of 2.77 mmol/g. This corresponds to an average number of MALA groups per polyisobutene chain of 1.7. Alternatively extraction of the product resulted in the removal of 2.2%w of tarry by-products, the acid value of the end product thus purified was essentially the same.

### Example 3

510 pbw of "ULTRAVIS 10" (Mₙ=950) and 106 parts of maleic anhydride (MALA) are heated within 60 min. to a temperature of ca. 198°C (boiling point of MALA). After ca. 6 hours the temperature was gradually increased to 204-206°C, and the reaction was continued for 18 hours. The crude reaction product was freed of unreacted MALA by heating at 160°C under reduced pressure. Tarry by-products were removed by filtration. The purified end product contained 84%w polyisobutene succinic anhydride and has an acid value of 2.40 mmol/g. This corresponds to an average number of MALA groups per polyisobutene chain of 1.6.

### Example 4

234 pbw of "ULTRAVIS 75" (M=2000) and 34 parts of maleic anhydride (MALA) are heated within 60 min. to a temperature of ca. 198°C (boiling point of MALA). After ca. 6 hours the temperature was gradually increased to 204-206°C, and the reaction was continued for 18 hours. The crude reaction product was freed of unreacted MALA by heating at 160°C under reduced pressure. Tarry by-products were removed by filtration and extraction with water. The purified end product contained 79% w polyisobutene succinic anhydride and has an acid value of 1.23 mmol/g. This corresponds to an average number of MALA groups per polyisobutene chain of 1.7.

### Example 5

"ULTRAVIS 10" and maleic anhydride (molar ratio 1:3) were reacted in an autoclave at 230°C for 4.5 hours. After removal of the excess of MALA and the tarry by-products, the resulting coupling product had an active matter content of 89% w and an acid value of 2.77 mmol/g. This corresponds to an average number of MALA groups per PIB of 1.7.

### Example 6

3154 pbw of "ULTRAVIS 10" (M=920) with a chlorine content of 7.2 ppm were preheated to ca. 75°C. After addition of 1010 parts of maleic anhydride (MALA), the reaction mixture was heated in 55 min. to a temperature of ca. 198°C (boiling point of MALA). After ca. 3 hours the temperature was gradually increased to 200-202°C, and after 7 hours to 204-206°C. After a total reaction time 24 hours, a sample of the purified end product (after removal of excess MALA, and tarry by-products) contained 91% w polyisobutene succinic anhydride and has an acid value of 2.98 mmol/g. This corresponds to an average number of MALA groups per polyisobutene chain of 1.8. The product had a chlorine content of 4.0 ppm.

### Example 7

After removal of the excess of MALA, the crude end product of example 5 was cooled down to ca. 160°C and diluted with "HVI 60" Oil (a high viscosity index base oil having a viscosity of about 4 x 10⁻³ Pa at 100°C). After mixing in 20 g of "Decalite" (Body feed filter aid) the product was filtered at ca. 140°C over a pressure filter precoated with "Decalite". The purified alkyl succinic anhydride was further reacted with triethylene tetramine (TETA), the molar ration of succinic anhydride groups to TETA being 2:1. After a reaction time of 4 hours at 180°C the product was purified by filtration over "Decalite". The purified bissuccinimide dispersant had an active matter content of 44% w, a nitrogen content of 1.56 % w, and a chlorine content of 3.6 ppm.

### Comparative Example 1

1000 pbw of "HYVIS 10", (Mₙ=980) and 300 parts of maleic anhydride (MALA) are heated within 60 min. to a temperature of ca. 198°C (Boiling point of MALA). After ca. 6 hours the temperature was gradually increased to 200-203°C, and the reaction was continued for 18 hours. The crude reaction product was freed of unreacted MALA by heating at 160°C under reduced pressure. Tarry by-products were removed by filtration. The purified end product contained 82% w polyisobutene succinic anhydride and has an acid value of 1.91 mmol/g. This corresponds to an average number of MALA groups per polyisobutene chain of 1.3.

### Comparative Example 2

"Hyvis 10" was reacted with maleic anhydride (molar ratio 1:3) in an autoclave at 215°C for 24 hours. Samples taken at various stages of the reaction as well as the endproduct were freed of excess MALA, and tarry by-products were removed by filtration. The analytical results (Table 1) show that even after 24 hours, the average number of MALA groups per PIB does not exceed 1.1.

**Table 1**

| Reaction Time (h) | Pressure bar | Acid value mmol/g | Active Matter %-w | Succinic groups per PIB |
|---|---|---|---|---|
| 2 | 3 | 0.88 | 48.4 | 1.00 |
| 4 | 4 | 1.18 | 64.4 | 1.00 |
| 6 | 5 | 1,35 | 70.6 | 1.05 |
| 7 | 6 | 1.43 | 73.4 | 1.05 |
| 24 | 15 | 1.68 | 83.9 | 1.10 |

### Example 8 Carbon Black Dispersancy Test

In the carbon black dispersancy test 3%w of carbon black is added to a lubricating oil formulation and the increase in kinematic viscosity at 60°C is determined, using an Ubbelohde viscometer. A large increase denotes a poor performance. It appears that the outcome of the relatively simple test correlates excellently with the ranking in dispersancy behaviour in diesel engine crank case lubricating oils. The test is described in British Rail publication BR 669:1984.

The formulation used was a SAE I5W40 Middle East lubricating oil which contained a commercial package of a zinc dialkyldithiophosphate, an overbased calcium alkyl salicylate and VI improver. To samples of this formulation were added 1%w/w of polyolefin succinimide products prepared from "Hyvis" and from "Ultravis". The resulting compositions were subjected to the carbon black dispersancy test (using 3%w "Cabot Carbon Elftex 460" as the carbon black), and the test results are reproduced in Table 2.

**Table 2**

| Product | Increase in viscosity (%) |
|---|---|
| "Hyvis" derived | 198.0 |
| "Ultravis" derived | 133.9 |

### Example 9

"Ultravis 75" (Mₙ=2000) was reacted with maleic anhydride (MALA) (molar ratio 1:3) in an autoclave at 235°C for 8 hours. Ater removal of the excess MALA, the crude reaction product was diluted with "HVI 60 Oil" and filtered as in Example 7. The purified product contained 47%w polyisobutene succinic anhydride and had an acid value of 0.68 mmol/g, corresponding to an average number of MALA groups per polyisobutene chain of 1.5.

The purified polyisobutene succinic anhydride was further reacted with tetraethylene pentamine (TEPA), the molar ratio of succinic anhydride groups to TEPA being 2:1. After a reaction time of 4 hours at 180°C the product was filtered over "Decalite". The purified bissuccinimide dispersant had an active matter content of 50 %w and a nitrogen content of 1.16 %w.

### Comparative Example 3

"Hyvis 75" (Mₙ = 1900) was reacted with maleic anhydride (molar ratio 1:3) in an autoclave at 235°C for 6 hours. After removal of the excess MALA, the crude reaction product was diluted with "HVI 60 Oil" and filtered (as in example 7). The purified product contained 53 %w polyisobutene succinic anhydride and had an acid value of 0.58 mmol/g, corresponding to an average number of MALA groups per polyisobutene chain of 1.1.

The purified polyisobutene succinic anhydride was further reacted with tetraethylene pentamine (TEPA), the molar ratio of succinic anhydride groups to TEPA being 2:1. After a reaction time of 4 hours at 180°C the product was filtered over "Decalite". The purified bissuccinimide dispersant had an active matter content of 47 %w and a nitrogen content of 0.81 %w.

### Example 10

### Sequence VE Engine Tests

The "HYVIS 75" and "ULTRAVIS 75"-based products of Comparative Example 3 and of Example 9 were each blended (as a concentrate in mineral oil and in an amount giving 2.5 %w of test product) with a SAE 10W/40 luboil containing some 12% w/w of an additive package comprising an overbased salicylate detergent, a V.I. Improver, a zinc-based anti-wear additive and a polymethacrylate pour point depressant. The resulting oil was then evaluated according to the "Sequence VE test procedure" (7th draft dated 19th May 1988; ASTM Monitoring Center, 4400 5th Avenue Pittsburgh USA).

For the purposes of comparison, similar evaluations were carried out on commercially available products "SAP 220" (Shell) and LZ 6418 (Lubrizol) which differ from those in the present invention that they do contain (low levels of) residual chlorine.

The results of the VE tests are set out in the Table below, together with the nature of and relative proportions of the reactants from which each product derives.

The engine tests are given under the following conventional codings:
- RACS: = Rocker Arm Cover Sludge
- AES: = Average Engine Sludge
- PSV: = Piston Skirt Varnish
- AEV: = Average Engine Varnish

For the sludge and varnish measurements, the results are on a 0-10 rating where 10 = zero sludge or varnish.

**TABLE 3**

| Product | Derivation | | | | Engine Testing | | | |
|---|---|---|---|---|---|---|---|---|
| | PIB Mₙ | PIB/MALA molar equivalent | Amine | Coupling Ratio | RACS | AES | PSV | AEV |
| SAP 220 | 950 | 1.0 | TETA | 2.0 | 3.0 | 7.0 | 6.3 | 4.0 |
| LZ 6418 | ca 1850 | ca 1.7 | TEPA | ca 2 | 7.0 | 8.8 | 6.7 | 5.1 |
| Comp. Ex. 3 | 1900 | 1.1 | TEPA | 2.0 | 4.5 | 5.2 | 6.8 | 5.8 |
| Ex. 9 | 1900 | 1.5 | TEPA | 2.0 | 9.0 | 9.1 | 7.1 | 5.8 |

## Claims

1. Process for the preparation of polyolefin-substituted succinic anhydrides essentially free from chlorine, which comprises heating a polyolefin containing at least 70% of the terminal groupings in a structure having an alpha olefinic bond and/or structures in equilibrium with such alpha olefinic structures, with a molar excess of maleic anhydride, for a sufficient period of time to obtain polyolefin-substituted succinic anhydrides in which the average molar ratio of succinic groups to polyolefin chains is greater than 1.3:1.

2. Process as claimed in claim 1 wherein at least 50% of the terminal groupings of the polyolefin contain an alpha olefinic bond, and less than 25% of the terminal groupings have structures other than those having an alpha olefinic double bond or in equilibrium therewith.

3. Process as claimed in claim 1 or 2 wherein the polyolefin is polyisobutylene.

4. Process as claimed in claim 1, 2 or 3 wherein the polyolefin has a number average molecular weight in the range of from 750 to 2500.

5. Process as claimed in any one of the preceding claims wherein the maleic anhydride/polyolefin molar ratio and composition of the polyolefin is selected to yield a product in which the average molar ratio of succinic groups to polyolefin chains is greater than 1.5:1.

6. Process as claimed in claim 5 wherein the molar ratio is at least 1.7:1.

7. Process as claimed in any one of claims 1 to 6 wherein the reaction temperature is in the range 180°C to 250°C.

8. Process for the preparation of a polyolefin-substituted succinic acid derivative which comprises preparing a succinic anhydride by a process as claimed in any one of claims 1 to 7 and subsequently reacting the resulting anhydride with an amine containing at least one =NH group or a polyol to form, respectively, a polyolefin-substituted succinimide or succinic ester.

9. Lubricating oil composition comprising a major amount of a lubricating base oil and a minor amount of a polyolefin-substituted succinic anhydride, acid, ester or imide when prepared by a process according to any one of claims 1 to 8.

10. A concentrate for formulating lubricating compositions which comprises a polyolefin-substituted succinic anhydride, acid, ester or imide when prepared by a process according to any one of Claims 1 to 8 together with a carrier oil which is compatible with said succinic derivative and is miscible with lubricating base oil.

## Patentansprüche

1. Verfahren zur Herstellung von polyolefinsubstituierten Bernsteinsäureanhydriden, welche im wesentlichen frei von Chlor sind, umfassend das Erhitzen eines Polyolefins, enthaltend mindestens 70% der Endgruppierungen in Form einer Struktur mit einer alpha-olefinischen Bindung und/oder in Form von Strukturen, die im Gleichgewicht mit solchen alpha-olefinischen Strukturen stehen, mit einem molaren Überschuß an Maleinsäureanhydrid, über einen ausreichenden Zeitraum, um polyolefinsubstituiertes Bernsteinsäureanhydrid zu erhalten, in welchem das durchschnittliche molare Verhältnis von Bernsteinsäuregruppen zu Polyolefinketten größer als 1,3:1 ist.

2. Verfahren wie in Anspruch 1 beansprucht, in welchem mindestens 50% der Endgruppierungen des Polyolefins eine alpha-olefinische Bindung enthalten und weniger als 25% der Endgruppierungen andere Strukturen haben als diejenigen, welche eine alpha-olefinische Doppelbindung aufweisen oder mit ihr im Gleichgewicht stehen.

3. Verfahren wie in Anspruch 1 oder 2 beansprucht, in welchem das Polyolefin Polyisobutylen ist.

4. Verfahren wie in Anspruch 1, 2 oder 3 beansprucht, in welchem das Polyolefin ein Molekulargewicht (Zahlenmittel) im Bereich von 750 bis 2500 hat.

5. Verfahren wie in einem der vorherigen Ansprüche beansprucht, in welchem das molare Verhältnis Maleinsäureanhydrid/Polyolefin und die Zusammensetzung des Polyolefins so ausgewählt werden, daß ein Erzeugnis gewonnen wird, in welchem das durchschnittliche molare Verhältnis von Bernsteinsäuregruppen zu Polyolefinketten größer als 1,5:1 ist.

6. Verfahren wie in Anspruch 5 beansprucht, in welchem das molare Verhältnis mindestens 1,7:1 ist.

7. Verfahren wie in einem der Ansprüche 1 bis 6 beansprucht, in welchem die Reaktionstemperatur im Bereich von 180 bis 250°C liegt.

8. Verfahren zur Herstellung eines polyolefinsubstituierten Bernsteinsäurederivats, umfassend das Herstellen eines Bernsteinsäureanhydrids durch ein Verfahren wie in einem der Ansprüche 1 bis 7 beansprucht, und anschließend das zur-Reaktion-bringen des gebildeten Anhydrids mit einem Amin, enthaltend mindestens eine =NH-Gruppe, oder mit einem Polyol, um jeweils ein polyolefinsubstituiertes Succinimid oder einen entsprechenden Bernsteinsäureester zu bilden.

9. Schmierölzusammensetzung, umfassend eine größere Menge eines Basisschmieröls und eine kleinere Menge an polyolefinsubstituiertem Bernsteinsäureanhydrid, oder einer davon abgeleiteten Säure, einem Ester oder einem Imid, hergestellt durch ein Verfahren nach einem der Ansprüche 1 bis 8.

10. Ein Konzentrat zur Formulierung von Schmierzusammensetzungen, umfassend ein polyolefinsubstituiertes Bernsteinsäureanhydrid, eine entsprechende Säure, einen Ester oder ein Imid, hergestellt durch eine Verfahren nach einem der Ansprüche 1 bis 8, zusammen mit einem Trägeröl, welches mit besagtem Bernsteinsäurederivat kompatibel und mit dem Basisschmieröl mischbar ist.

## Revendications

1. Procédé pour la préparation d'anhydrides succiniques substitués par des polyoléfines pratiquement exempts de chlore, comprenant le chauffage d'une polyoléfine contenant au moins 70% des groupements terminaux dans la structure ayant une liaison alpha oléfinique et/ou des structures en équilibre avec de telles structures alpha oléfiniques, avec un excès molaire d'anhydride maléique, pendant une durée suffisante pour former des anhydrides succiniques substitués par des polyoléfines, dans lesquels le rapport molaire moyen des groupes succiniques aux chaînes de polyoléfine est supérieur à 1,3:1.

2. Procédé selon la revendication 1, dans lequel au moins 50% des groupements terminaux de la polyoléfine contiennent une liaison alpha oléfinique, et moins de 25% des groupements terminaux ont des structures autres que celles ayant une double liaison alpha oléfinique ou en équilibre avec elles.

3. Procédé selon l'une des revendications 1 ou 2, dans lequel la polyoléfine est du polyisobutylène.

4. Procédé selon l'une quelconque des revendications 1, 2 ou 3, dans lequel la polyoléfine a une masse moléculaire moyenne en nombre dans l'intervalle de 750 à 2500.

5. Procédé selon l'une quelconque des revendications précédentes, dans lequel le rapport molaire anhydride maléique/polyoléfine et la composition de la polyoléfine sont choisis pour procurer un produit dans lequel le rapport molaire moyen des groupes succiniques aux chaînes de polyoléfine est supérieur à 1,5:1.

6. Procédé selon la revendication 5, dans lequel le rapport molaire est au moins 1,7:1.

7. Procédé selon l'une quelconque des revendications 1 à 6, dans lequel la température de réaction est dans l'intervalle de 180°C à 250°C.

8. Procédé pour la préparation d'un dérivé d'acide succinique substitué par une polyoléfine, comprenant la préparation d'un anhydride succinique par un procédé selon l'une quelconque des revendications 1 à 7 et subséquemment la réaction de l'anhydride résultant avec une amine contenant au moins un groupe =NH ou un polyol pour former, respectivement, un succinimide ou un ester succinique substitué par une polyoléfine.

9. Composition d'huile lubrifiante comprenant une quantité majeure d'une huile de base lubrifiante et une quantité mineure d'un anhydride, acide, ester ou imide succinique substitué par une polyoléfine, préparé par un procédé selon l'une quelconque des revendications 1 à 8.

10. Concentré pour la formulation de compositions lubrifiantes, comprenant un anhydride, acide, ester ou imide succinique substitué par une polyoléfine, préparé par un procédé selon l'une quelconque des revendications 1 à 8, conjointement avec une huile support qui est compatible avec ledit dérivé succinique et est miscible avec l'huile de base lubrifiante.
